# EUROPEAN PATENT SPECIFICATION

(11) **EP 3 116 272 B1**
(45) Date of publication and mention of the grant of the patent: **11.09.2019**
(21) Application number: 15768738.5
(22) Date of filing: 25.03.2015
(51) Int. Cl.: H04W 64/00, G01S 5/02

(54) **LOCATING METHOD AND DEVICE**
ORTUNGSVERFAHREN UND -VORRICHTUNG
PROCÉDÉ ET DISPOSITIF DE LOCALISATION

(30) Priority: 28.03.2014 CN 201410123659
(43) Date of publication of application: 11.01.2017
(73) Proprietor: Huawei Technologies Co., Ltd., Longgang District Shenzhen, Guangdong 518129 (CN)
(72) Inventor: CHEN, Xueliang, Shenzhen Guangdong 518129 (CN); XIE, Yong, Shenzhen Guangdong 518129 (CN)
(74) Representative: Gill Jennings & Every LLP
(86) International application number: PCT/CN2015/075015
(87) International publication number: WO 2015/144055

(56) References cited:
- CN-A- 101 212 495
- CN-A- 103 379 437
- CN-A- 103 560 813
- CN-A- 103 630 919
- CN-A- 103 686 608
- US-A1- 2007 159 986
- US-A1- 2010 202 300
- US-A1- 2013 029 685
- US-A1- 2013 281 110

## Description

### TECHNICAL FIELD

The present disclosure relates to the field of information technologies, and in particular, to a positioning method and apparatus.

### BACKGROUND

In a self-moving network system, the system controls a self-moving node, so that the self-moving node moves to a target location. The self-moving node may be positioned by using a location sensor. However, because relatively much noise exists in data collected by the location sensor, when the self-moving node is being positioned by using the location sensor, there is a relatively great deviation in location information of the self-moving node. In addition, the self-moving node may further be positioned by using a WiFi (Wireless Fidelity, Wireless Fidelity) technology.

Currently, in a scenario of temporary deployment, some fixed nodes are deployed first, then a large quantity of measurements are performed to obtain location information of each reference point, and finally, the self-moving node obtains current location information of the self-moving device by using RSS (Received Signal Strength, received signal strength) values that are from the nodes and the location information of each reference point in a database. The fixed node may be a fixed WiFi AP (Access Point, WiFi access point).

However, when the self-moving node is being positioned by using a deployed fixed node, because a large quantity of fixed nodes cannot be deployed in advance, there is a situation in which a large quantity of positioning blind areas exists. Consequently, a self-moving node that is in a positioning blind area cannot be positioned.

US 2013/0029685 relates to distributed method and system for determining the position of a mobile device using long-range signals and calibrating the position using short-range signals. US 2010/0202300 relates to systems and methods for space-time determinations with reduced network traffic. US 2007/0159986 relates to method of refining node position information in wireless sensor network.

The present disclosure addresses the problem of positioning a self-moving node that is in a positioning blind area.

### SUMMARY

Aspects of the present disclosure provide a positioning method and apparatus, which can position a self-moving node that is in a blind area.

Various aspects of the present disclosure have been defined in the independent claims. Further technical features of each of these aspects have been defined in the respective dependent claims.

According to the positioning method and apparatus provided in the aspects of the present disclosure, first, location information is obtained by using at least one non-fixed node; then, positioning information is determined according to the location information; and finally, the positioning information is broadcast. Compared with the prior art in which a self-moving node can obtain location information by using only a fixed node, in the aspects of the present disclosure, a self-moving node can determine positioning information of the self-moving node by obtaining location information broadcast by another non-fixed node, so as to determine the positioning information by using location information of another node when the self-moving node cannot determine the positioning information by using a fixed node, thereby positioning a self-moving node that is in a positioning blind area.

### BRIEF DESCRIPTION OF DRAWINGS

To describe the technical solutions in the aspects of the present disclosure more clearly, the following briefly introduces the accompanying drawings required for describing the aspects or the prior art. Apparently, the accompanying drawings in the following description show merely some aspects of the present disclosure, and a person of ordinary skill in the art may still derive other drawings from these accompanying drawings without creative efforts.
FIG. 1 is a schematic diagram of an architecture of a positioning system according to an aspect of the present disclosure;
FIG. 2 is a flowchart of a positioning method according to an aspect of the present disclosure;
FIG. 3 is a flowchart of another positioning method according to an aspect of the present disclosure;
FIG. 4 is a flowchart of another positioning method according to an aspect of the present disclosure;
FIG. 5 is a flowchart of another positioning method according to an aspect of the present disclosure;
FIG. 6 is a flowchart of another positioning method according to an aspect of the present disclosure;
FIG. 7 is a schematic structural diagram of a positioning apparatus according to an aspect of the present disclosure;
FIG. 8 is a schematic structural diagram of a self-moving node according to an aspect of the present disclosure;
FIG. 9 is a schematic structural diagram of another positioning apparatus according to an aspect of the present disclosure; and
FIG. 10 is a schematic structural diagram of another self-moving node according to an aspect of the present disclosure.

### DESCRIPTION OF ASPECTS

To make the advantages of the technical solutions of the present disclosure clearer, the following describes the present disclosure in detail with reference to the accompanying drawings and aspects.

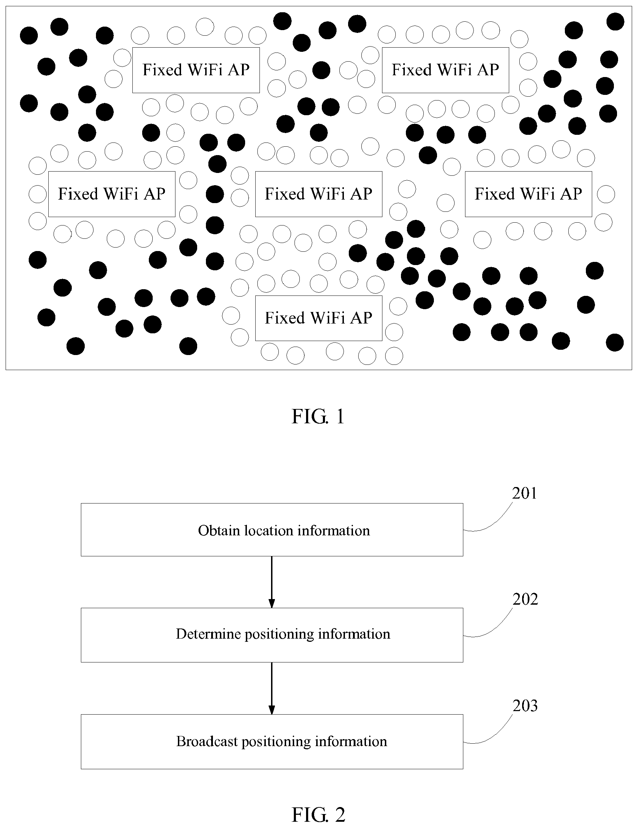

The technical solutions provided in the aspects of the present disclosure may be applicable to a situation in which a few fixed nodes are deployed, as shown in FIG. 1. A square-shaped pattern is a fixed WiFi AP, that is, a fixed node in the aspects of the present disclosure; a circular pattern is a self-moving node. Specifically, according to whether a self-moving node can obtain location information by using a fixed node, self-moving nodes may be classified into a standard node and a non-standard node. The standard node is a node that can obtain location information by using a fixed node. That is, the standard node is out of a positioning blind area. The non-standard node is a node that cannot obtain location information by using a fixed node. That is, the non-standard node is in the positioning blind area. For example, in FIG. 1, a white circular pattern is a standard node, and a black circular pattern is a non-standard node.

An aspect of the present disclosure provides a positioning method. As shown in FIG. 2, the method includes:
201. A self-moving node obtains location information by using at least one non-fixed node.

The location information is information for positioning. In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the self-moving node may further determine positioning information by using a location sensor. The location sensor may obtain location information of the self-moving node by using data such as a moving speed, a moving direction, and a moving height of the self-moving node. In this aspect of the present disclosure, the location sensor may be a gyroscope, an acceleration sensor, a magnetometer, a geomagnetic sensor, or the like. Specifically, the location sensor may be a GPS (Global Positioning System, Global Positioning System), a G-Sensor (Gravity-sensor, gravity-sensor), a Gyroscope (gyroscope), a Geomagnetism Sensor (geomagnetism sensor), or the like.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

202. The self-moving node determines positioning information according to the location information.

Specifically, a method for determining positioning information by the self-moving node by using a fixed node includes: a triangle algorithm and a location fingerprinting (fingerprinting) algorithm. In the triangle algorithm, location information of a to-be-measured object is estimated by using information about a distance between the to-be-measured object and at least three known reference points. In the location fingerprinting algorithm, RSS values that are from different fixed nodes and on each reference point are measured in advance, and a correspondence between location information of each reference point and the RSS values from the different fixed nodes is recorded; then location information of a to-be-measured object is obtained according to RSS values that are from different fixed nodes and on the to-be-measured object. In this aspect of the present disclosure, a standard node may obtain location information by using the triangle algorithm, or may obtain location information by using the location fingerprinting algorithm, which is not limited in this aspect of the present disclosure.

In this aspect of the present disclosure, a method for determining positioning information is proposed for a self-moving node that cannot determine the positioning information according to a fixed node, that is, proposed for a self-moving node that is in a positioning blind area, so that positioning information corresponding to the self-moving node in the positioning blind area may be determined. In this aspect of the present disclosure, the self-moving node may determine the positioning information by using at least one another self-moving node or a sensor.

Optionally, the self-moving node may determine the positioning information by using the location information broadcast by the at least one non-fixed node, where the non-fixed node may be a standard node or a non-standard node. When the self-moving node determines the positioning information by using at least one standard node, because the standard node determines positioning information by using a fixed node, a positioning error in location information broadcast by the standard node is relatively small, and further, a positioning error in the positioning information determined by the self-moving node by using the at least one standard node is relatively small. When the self-moving node determines the positioning information by using at least one non-standard node, because the non-standard node determines positioning information by using another fixed node or a location sensor, a positioning error in location information broadcast by the non-standard node is relatively great, and further, a positioning error in the positioning information determined by the self-moving node by using the at least one non-standard node is relatively great.

Alternatively, the self-moving node may further determine the positioning information by using a location sensor. Because data collected by the location sensor includes a large amount of noise, a positioning error in the positioning information determined by using the location sensor is relatively great. In this aspect of the present disclosure, if the self-moving node has determined the positioning information by using the location sensor, when the self-moving node may determine positioning information by using a fixed node or a non-fixed node with a relatively small positioning error, the self-moving node calibrates the location sensor according to the currently determined positioning information and the positioning information previously determined by using the location sensor, and updates the positioning error of the location sensor.

203. The self-moving node broadcasts the positioning information.

In this aspect of the present disclosure, the self-moving node broadcasts the determined positioning information, so that another self-moving node may receive the location information broadcast by the self-moving node. Therefore, the another self-moving node may determine positioning information by using the location information broadcast by the self-moving node.

In this aspect of the present disclosure, the self-moving node may broadcast only the location information, or broadcast both the positioning information and the positioning error.

In an aspect, when the self-moving node obtains the location information by using a fixed node, a positioning error of the obtained location information is relatively small. In this case, the self-moving node may broadcast the location information and the relatively small positioning error. When the self-moving node obtains the location information by using a standard node, a positioning error of the obtained location information is relatively small. In this case, the self-moving node may broadcast the location information and the relatively small positioning error.

In another aspect, when the self-moving node obtains the location information by using a non-standard node, a positioning error of the obtained location information is relatively great. In this case, the self-moving node may broadcast the location information and the relatively great positioning error. When the self-moving node obtains the location information by using a location sensor, a positioning error of the obtained location information is relatively great. In this case, the self-moving node may broadcast the location information and the relatively great positioning error.

In this aspect of the present disclosure, the self-moving node may determine, according to location information and a positioning error that are broadcast by another peripheral non-fixed node, a positioning period of the self-moving node and a frequency of broadcasting the location information. Specifically, when the positioning error corresponding to the location information broadcast by the another peripheral non-fixed node is relatively small, accuracy of the location information obtained by the self-moving node is relatively high. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to data fed back by the location sensor, a positioning period of the self-moving node and a frequency of broadcasting the location information. Specifically, when a change of acceleration data fed back by the location sensor is relatively small, that is, the self-moving node does not move relatively frequently, the self-moving node does not need to frequently obtain the location information. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to an actual demand, a positioning period of the self-moving node and a frequency of broadcasting the location information. Specifically, when a positioning real-time requirement of the self-moving node is relatively high, the self-moving node may prolong the positioning period of the self-moving node and increase the frequency of broadcasting the location information. In this aspect of the present disclosure, a real-time requirement of the self-moving node can be met by prolonging the positioning period of the self-moving node.

According to the positioning method and apparatus provided in the aspects of the present disclosure, first, location information is obtained by using at least one non-fixed node; then, positioning information is determined according to the location information; and finally, the positioning information is broadcast. Compared with the prior art in which a self-moving node can obtain location information by using only a fixed node, in this aspect of the present disclosure, a self-moving node can determine positioning information of the self-moving node by obtaining location information broadcast by another non-fixed node, so as to determine the positioning information by using location information of another node when the self-moving node cannot determine the positioning information by using a fixed node, thereby positioning a self-moving node that is in a positioning blind area.

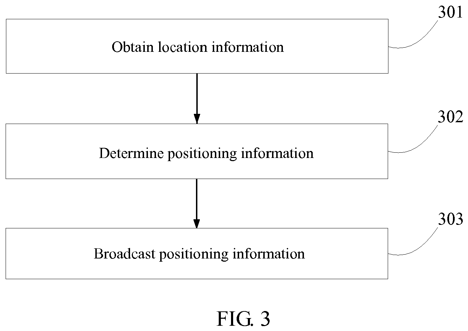

An aspect of the present disclosure provides another positioning method. As shown in FIG. 3, when a self-moving node is positioned by using a standard node, the method includes:
301. The self-moving node obtains location information by using at least one non-fixed node.

The location information is information for positioning. In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the non-fixed node may be a standard node. The standard node is a node that determines positioning information by using a fixed node. In this aspect of the present disclosure, when the self-moving node determines positioning information by using at least one standard node, because the standard node obtains location information by using a fixed node, a positioning error in the location information broadcast by the standard node is relatively small, and further, a positioning error in the location information obtained by the self-moving node by using the at least one standard node is relatively small.

In this aspect of the present disclosure, the self-moving node may further determine positioning information by using a location sensor. The location sensor may obtain location information of the self-moving node by using data such as a moving speed, a moving direction, and a moving height of the self-moving node. In this aspect of the present disclosure, the location sensor may be a gyroscope, an acceleration sensor, a magnetometer, a geomagnetic sensor, or the like. Specifically, the location sensor may be a GPS, a G-Sensor, a Gyroscope, a Geomagnetism, or the like.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

In this aspect of the present disclosure, a positioning error of the at least one non-fixed node may be a greatest positioning error of the at least one non-fixed node. For example, if the self-moving node may obtain the location information by using four other nodes, and positioning errors of the four nodes are respectively 0.1, 0.2, 0.25, and 0.5, the self-moving node obtains the maximum value 0.5 and uses 0.5 as the greatest positioning error of the at least one another node.

302. The self-moving node determines positioning information according to the location information.

Specifically, a method for determining positioning information by the self-moving node by using a fixed node includes: a triangle algorithm and a location fingerprinting algorithm. In the triangle algorithm, location information of a to-be-measured object is estimated by using information about a distance between the to-be-measured object and at least three known reference points. In the location fingerprinting algorithm, RSS values that are from different fixed nodes and on each reference point are measured in advance, and a correspondence between location information of each reference point and the RSS values from the different fixed nodes is recorded; then location information of a to-be-measured object is obtained according to RSS values that are from different fixed nodes and on the to-be-measured object. In this aspect of the present disclosure, a standard node may obtain location information by using the triangle algorithm, or may obtain location information by using the location fingerprinting algorithm, which is not limited in this aspect of the present disclosure.

In this aspect of the present disclosure, a method for determining positioning information is proposed for a self-moving node that cannot determine the positioning information according to a fixed node, that is, proposed for a self-moving node that is in a positioning blind area, so that positioning information corresponding to the self-moving node in the positioning blind area may be determined. In this aspect of the present disclosure, the self-moving node may determine the positioning information by using at least one another self-moving node or a sensor.

Optionally, the self-moving node may determine the positioning information by using the location information broadcast by the at least one non-fixed node, where the non-fixed node may be a standard node or a non-standard node. When the self-moving node determines the positioning information by using at least one standard node, because the standard node determines positioning information by using a fixed node, a positioning error in location information broadcast by the standard node is relatively small, and further, a positioning error in the positioning information determined by the self-moving node by using the at least one standard node is relatively small. When the self-moving node determines the positioning information by using at least one non-standard node, because the non-standard node determines positioning information by using another fixed node or a location sensor, a positioning error in location information broadcast by the non-standard node is relatively great, and further, a positioning error in the positioning information determined by the self-moving node by using the at least one non-standard node is relatively great.

Alternatively, the self-moving node may further determine the positioning information by using a location sensor. Because data collected by the location sensor includes a large amount of noise, a positioning error in the positioning information determined by using the location sensor is relatively great. In this aspect of the present disclosure, if the self-moving node has determined the positioning information by using the location sensor, when the self-moving node may determine positioning information by using a fixed node or a non-fixed node with a relatively small positioning error, the self-moving node calibrates the location sensor according to the currently determined positioning information and the positioning information previously determined by using the location sensor, and updates the positioning error of the location sensor.

Optionally, after step 302, the method may further include: updating, by the self-moving node, the positioning error of the location sensor according to a positioning error of the at least one non-fixed node.

Specifically, the self-moving node may calibrate the location sensor according to the positioning error of the at least one non-fixed node, and update a positioning error of the calibrated location sensor.

In this aspect of the present disclosure, when the self-moving node obtains the location information by using a standard node, a positioning error in the location information of the self-moving node obtained by the self-moving node is relatively small. In this case, the self-moving node may update the positioning error of the location sensor by using a difference between the location information obtained by using the standard node and the location information obtained by using the location sensor.

In this aspect of the present disclosure, because data collected by a sensor includes a large amount of noise, a positioning error in location information obtained by using the sensor is relatively great. For example, the self-moving node may obtain the location information by means of Sensor Assisted Positioning (sensor assisted positioning). Because a function of obtaining the location information by means of Sensor Assisted Positioning becomes inaccurate over time, when Sensor Assisted Positioning may be used to obtain the location information by using a fixed WiFi AP or a standard node, positioning calibration needs to be performed on the sensor.

303. The self-moving node broadcasts the positioning information.

In this aspect of the present disclosure, the self-moving node broadcasts the determined positioning information, so that another self-moving node may receive the location information broadcast by the self-moving node. Therefore, the another self-moving node may determine positioning information by using the location information broadcast by the self-moving node.

In this aspect of the present disclosure, the self-moving node may broadcast only the location information, or broadcast both the positioning information and the positioning error.

In an aspect, when the self-moving node obtains the location information by using a fixed node, a positioning error of the obtained location information is relatively small. In this case, the self-moving node may broadcast the location information and the relatively small positioning error. When the self-moving node obtains the location information by using a standard node, a positioning error of the obtained location information is relatively small. In this case, the self-moving node may broadcast the location information and the relatively small positioning error.

In another aspect, when the self-moving node obtains the location information by using a non-standard node, a positioning error of the obtained location information is relatively great. In this case, the self-moving node may broadcast the location information and the relatively great positioning error. When the self-moving node obtains the location information by using a location sensor, a positioning error of the obtained location information is relatively great. In this case, the self-moving node may broadcast the location information and the relatively great positioning error.

Specifically, when the self-moving node obtains the location information by using a standard node, a positioning error in the location information of the self-moving node obtained by the self-moving node is relatively small. In this case, the self-moving node broadcasts the location information and the relatively small positioning error.

In this aspect of the present disclosure, the self-moving node may determine, according to location information and a positioning error that are broadcast by another peripheral non-fixed node, a positioning period of the self-moving node and a frequency of broadcasting the location information. Specifically, when the positioning error corresponding to the location information broadcast by the another peripheral non-fixed node is relatively small, accuracy of the location information obtained by the self-moving node is relatively high. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to data fed back by the location sensor, a positioning period of the self-moving node and a frequency of broadcasting the location information. Specifically, when a change of acceleration data fed back by the location sensor is relatively small, that is, the self-moving node does not move relatively frequently, the self-moving node does not need to frequently obtain the location information. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to an actual demand, a positioning period of the self-moving node and a frequency of broadcasting the location information. Specifically, when a positioning real-time requirement of the self-moving node is relatively high, the self-moving node may prolong the positioning period of the self-moving node and increase the frequency of broadcasting the location information. In this aspect of the present disclosure, a real-time requirement of the self-moving node can be met by prolonging the positioning period of the self-moving node.

According to the positioning method and apparatus provided in the aspects of the present disclosure, first, location information is obtained by using at least one non-fixed node; then, positioning information is determined according to the location information; and finally, the positioning information is broadcast. Compared with the prior art in which a self-moving node can obtain location information by using only a fixed node, in this aspect of the present disclosure, a self-moving node can determine positioning information of the self-moving node by obtaining location information broadcast by another non-fixed node, so as to determine the positioning information by using location information of another node when the self-moving node cannot determine the positioning information by using a fixed node, thereby positioning a self-moving node that is in a positioning blind area.

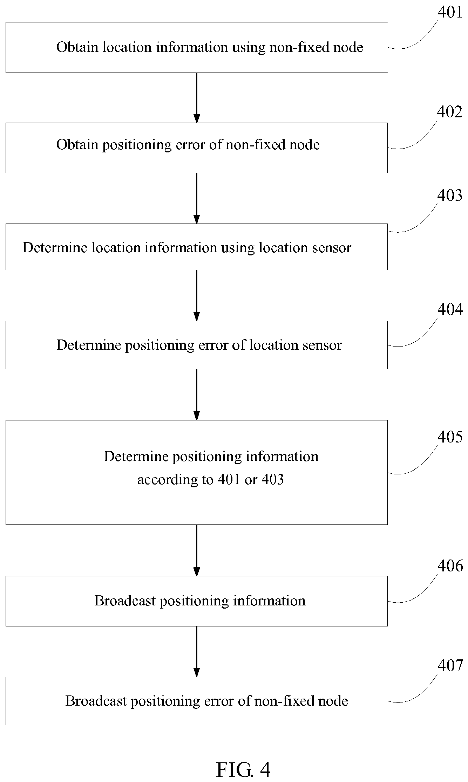

An aspect of the present disclosure provides another positioning method. As shown in FIG. 4, when a self-moving node is positioned by using a non-standard node or a sensor of the self-moving node, the method includes:
401. The self-moving node obtains location information by using at least one non-fixed node.

The location information is information for positioning. In this aspect of the present disclosure, the non-fixed node is another self-moving node except the foregoing self-moving node. In this aspect of the present disclosure, a fixed node may be a fixed WiFi AP, and the non-fixed node may be a self-moving node.

Optionally, the non-fixed node may be a standard node. The standard node is a node that determines positioning information by using a fixed node.

Alternatively, the non-fixed node may also be a non-standard node. The non-standard node is a node that determines positioning information by using a non-fixed node or a location sensor.

In this aspect of the present disclosure, the non-fixed node may be a standard node. The standard node is a node that determines positioning information by using a fixed node. In this aspect of the present disclosure, when the self-moving node determines positioning information by using at least one standard node, because the standard node obtains location information by using a fixed node, a positioning error in the location information broadcast by the standard node is relatively small, and further, a positioning error in the location information obtained by the self-moving node by using the at least one standard node is relatively small.

In this aspect of the present disclosure, the self-moving node may further determine positioning information by using a location sensor. The location sensor may obtain location information of the self-moving node by using data such as a moving speed, a moving direction, and a moving height of the self-moving node. In this aspect of the present disclosure, the location sensor may be a gyroscope, an acceleration sensor, a magnetometer, a geomagnetic sensor, or the like. Specifically, the location sensor may be a GPS, a G-Sensor, a Gyroscope, a Geomagnetism, or the like.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

In this aspect of the present disclosure, a positioning error of the at least one non-fixed node may be a greatest positioning error of the at least one non-fixed node. For example, if the self-moving node may obtain the location information by using four other nodes, and positioning errors of the four nodes are respectively 0.1, 0.2, 0.25, and 0.5, the self-moving node obtains the maximum value 0.5 and uses 0.5 as the greatest positioning error of the at least one another node.

402. The self-moving node obtains a positioning error of the at least one non-fixed node.

The positioning error of the at least one non-fixed node may be a greatest positioning error of the at least one non-fixed node.

For example, if the self-moving node may obtain the location information by using four other nodes, and positioning errors of the four nodes are respectively 0.1, 0.2, 0.25, and 0.5, the self-moving node obtains the maximum value 0.5 and uses 0.5 as the greatest positioning error of the at least one another node.

Optionally, when the self-moving node may be positioned by using multiple groups of different non-standard nodes, the self-moving node may first obtain a positioning error respectively corresponding to each node in the multiple groups of different non-standard nodes, then separately obtain a greatest positioning error respectively corresponding to each group of non-standard nodes in the multiple groups of different non-standard nodes, and finally select, from the multiple groups of different other nodes, a group of non-standard nodes corresponding to a minimum value in the greatest positioning errors, so as to obtain the location information of the self-moving node.

For example, the self-moving node may be positioned by using three groups of different non-standard nodes. The self-moving node first obtains a positioning error corresponding to each node in the three groups of non-standard nodes. Positioning errors corresponding to a first group of non-standard nodes are 0.2, 0.4, 0.3, 0.35, and 0.22 respectively, positioning errors corresponding to a second group of non-standard nodes are 0.3, 0.5, 0.15, and 0.1 respectively, and positioning errors corresponding to a third group of non-standard nodes are 0.2, 0.2, 0.45, 0.3, and 0.38 respectively. Then, the self-moving node obtains greatest positioning errors respectively corresponding to the three groups of non-standard nodes, where a greatest positioning error corresponding to the first group of non-standard nodes is 0.4, a greatest positioning error corresponding to the second group of non-standard nodes is 0.5, and a greatest positioning error corresponding to the third group of non-standard nodes is 0.45. Finally, the self-moving node selects a group of nodes, that is, the first group of other nodes, corresponding to the minimum value 0.4 in the greatest positioning errors respectively corresponding to the three groups of non-standard nodes.

403. The self-moving node determines location information by using a location sensor.

Specifically, a method for determining positioning information by the self-moving node by using a fixed node includes: a triangle algorithm and a location fingerprinting algorithm. In the triangle algorithm, location information of a to-be-measured object is estimated by using information about a distance between the to-be-measured object and at least three known reference points. In the location fingerprinting algorithm, RSS values that are from different fixed nodes and on each reference point are measured in advance, and a correspondence between location information of each reference point and the RSS values from the different fixed nodes is recorded; then location information of a to-be-measured object is obtained according to RSS values that are from different fixed nodes and on the to-be-measured object. In this aspect of the present disclosure, a standard node may obtain location information by using the triangle algorithm, or may obtain location information by using the location fingerprinting algorithm, which is not limited in this aspect of the present disclosure.

In this aspect of the present disclosure, a method for determining positioning information is proposed for a self-moving node that cannot determine the positioning information according to a fixed node, that is, proposed for a self-moving node that is in a positioning blind area, so that positioning information corresponding to the self-moving node in the positioning blind area may be determined. In this aspect of the present disclosure, the self-moving node may determine the positioning information by using at least one another self-moving node or a sensor.

Optionally, the self-moving node may determine the positioning information by using the location information broadcast by the at least one non-fixed node, where the non-fixed node may be a standard node or a non-standard node. When the self-moving node determines the positioning information by using at least one standard node, because the standard node determines positioning information by using a fixed node, a positioning error in location information broadcast by the standard node is relatively small, and further, a positioning error in the positioning information determined by the self-moving node by using the at least one standard node is relatively small. When the self-moving node determines the positioning information by using at least one non-standard node, because the non-standard node determines positioning information by using another fixed node or a location sensor, a positioning error in location information broadcast by the non-standard node is relatively great, and further, a positioning error in the positioning information determined by the self-moving node by using the at least one non-standard node is relatively great.

Alternatively, the self-moving node may further determine the positioning information by using a location sensor. Because data collected by the location sensor includes a large amount of noise, a positioning error in the positioning information determined by using the location sensor is relatively great. In this aspect of the present disclosure, if the self-moving node has determined the positioning information by using the location sensor, when the self-moving node may determine positioning information by using a fixed node or a non-fixed node with a relatively small positioning error, the self-moving node calibrates the location sensor according to the currently determined positioning information and the positioning information previously determined by using the location sensor, and updates the positioning error of the location sensor.

404. The self-moving node determines a positioning error of the location sensor.

In this aspect of the present disclosure, because data collected by a sensor includes a large amount of noise, a positioning error in location information obtained by using the sensor is relatively great. For example, the self-moving node may obtain the location information by means of Sensor Assisted Positioning (sensor assisted positioning). Because a function of obtaining the location information by means of Sensor Assisted Positioning becomes inaccurate over time, when Sensor Assisted Positioning may be used to obtain the location information by using a fixed WiFi AP or a standard node, positioning calibration needs to be performed on the sensor.

405. The self-moving node determines positioning information according to the location information obtained by using the at least one non-fixed node or the location information determined by using the location sensor.

Specifically, step 405 may be: if the positioning error of the at least one non-fixed node is less than or equal to the positioning error of the location sensor, determining, by the self-moving node, the positioning information according to the location information obtained by using the at least one non-fixed node.

In this aspect of the present disclosure, when the greatest positioning error of the at least one non-fixed node is less than or equal to the positioning error of the location sensor, accuracy of the location information obtained by the self-moving node by using the at least one another node is higher. Therefore, the self-moving node needs to determine the location information by using the at least one another node.

In this aspect of the present disclosure, when the self-moving node determines the positioning information according to the location information obtained by using the at least one non-fixed node, the self-moving node updates the positioning error of the location sensor according to the positioning error of the at least one non-fixed node. Specifically, the self-moving node may calibrate the location sensor according to the positioning error of the at least one non-fixed node, and update a positioning error of the calibrated location sensor.

In this aspect of the present disclosure, when the self-moving node obtains the location information by using a non-standard node, the positioning error in the location information of the self-moving node obtained by the self-moving node is less than the positioning error in the location information obtained by using the location sensor. In this case, the self-moving node may update the positioning error of the location sensor by using a difference between the location information obtained by using the non-standard node and the location information obtained by using the location sensor.

In this aspect of the present disclosure, because data collected by a sensor includes a large amount of noise, a positioning error in location information obtained by using the sensor is relatively great. For example, the self-moving node may obtain the location information by means of Sensor Assisted Positioning. Because a function of obtaining the location information by means of Sensor Assisted Positioning becomes inaccurate over time, when Sensor Assisted Positioning may be used to obtain the location information by using a fixed WiFi AP or a standard node, positioning calibration needs to be performed on the sensor.

Specifically, step 405 may also be: if the positioning error of the at least one non-fixed node is greater than the positioning error of the sensor, determining, by the self-moving node, the positioning information according to the location information determined by using the location sensor.

In this aspect of the present disclosure, when the greatest positioning error of the at least one non-fixed node is greater than the positioning error of the location sensor, accuracy of the location information determined by the self-moving node by using the location sensor is higher. Therefore, the self-moving node needs to determine the location information by using the location sensor.

In this aspect of the present disclosure, a positioning error of at least one non-standard node may represent accuracy of the location information obtained by the self-moving node by using at least one another node. The positioning error of the location sensor may represent accuracy of the location information obtained by the self-moving node by using the sensor. Specifically, if a positioning error of the at least one another node is less than or equal to the positioning error of the location sensor, accuracy of the location information obtained by the self-moving node by using the at least one another node is higher; if a greatest positioning error of the at least one another node is greater than the positioning error of the location sensor, accuracy of the location information obtained by the self-moving node by using the location sensor is higher.

406. The self-moving node broadcasts the positioning information.

In this aspect of the present disclosure, the self-moving node broadcasts the determined positioning information, so that another self-moving node may receive the location information broadcast by the self-moving node. Therefore, the another self-moving node may determine positioning information by using the location information broadcast by the self-moving node.

407. The self-moving node broadcasts the positioning error of the at least one non-fixed node.

In this aspect of the present disclosure, the self-moving node may broadcast only the location information, or broadcast both the positioning information and the positioning error.

In an aspect, when the self-moving node obtains the location information by using a fixed node, a positioning error of the obtained location information is relatively small. In this case, the self-moving node may broadcast the location information and the relatively small positioning error. When the self-moving node obtains the location information by using a standard node, a positioning error of the obtained location information is relatively small. In this case, the self-moving node may broadcast the location information and the relatively small positioning error.

In another aspect, when the self-moving node obtains the location information by using a non-standard node, a positioning error of the obtained location information is relatively great. In this case, the self-moving node may broadcast the location information and the relatively great positioning error. When the self-moving node obtains the location information by using a location sensor, a positioning error of the obtained location information is relatively great. In this case, the self-moving node may broadcast the location information and the relatively great positioning error.

Specifically, when the self-moving node obtains the location information by using a standard node, a positioning error in the location information of the self-moving node obtained by the self-moving node is relatively small. In this case, the self-moving node broadcasts the location information and the relatively small positioning error.

In this aspect of the present disclosure, the self-moving node may determine, according to location information and a positioning error that are broadcast by another peripheral non-fixed node, a positioning period of the self-moving node and a frequency of broadcasting the location information. Specifically, when the positioning error corresponding to the location information broadcast by the another peripheral non-fixed node is relatively small, accuracy of the location information obtained by the self-moving node is relatively high. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to data fed back by the location sensor, a positioning period of the self-moving node and a frequency of broadcasting the location information. Specifically, when a change of acceleration data fed back by the location sensor is relatively small, that is, the self-moving node does not move relatively frequently, the self-moving node does not need to frequently obtain the location information. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to an actual demand, a positioning period of the self-moving node and a frequency of broadcasting the location information. Specifically, when a positioning real-time requirement of the self-moving node is relatively high, the self-moving node may prolong the positioning period of the self-moving node and increase the frequency of broadcasting the location information. In this aspect of the present disclosure, a real-time requirement of the self-moving node can be met by prolonging the positioning period of the self-moving node.

According to the positioning method and apparatus provided in the aspects of the present disclosure, first, location information is obtained by using at least one non-fixed node; then, positioning information is determined according to the location information; and finally, the positioning information is broadcast. Compared with the prior art in which a self-moving node can obtain location information by using only a fixed node, in this aspect of the present disclosure, a self-moving node can determine positioning information of the self-moving node by obtaining location information broadcast by another non-fixed node, so as to determine the positioning information by using location information of another node when the self-moving node cannot determine the positioning information by using a fixed node, thereby positioning a self-moving node that is in a positioning blind area.

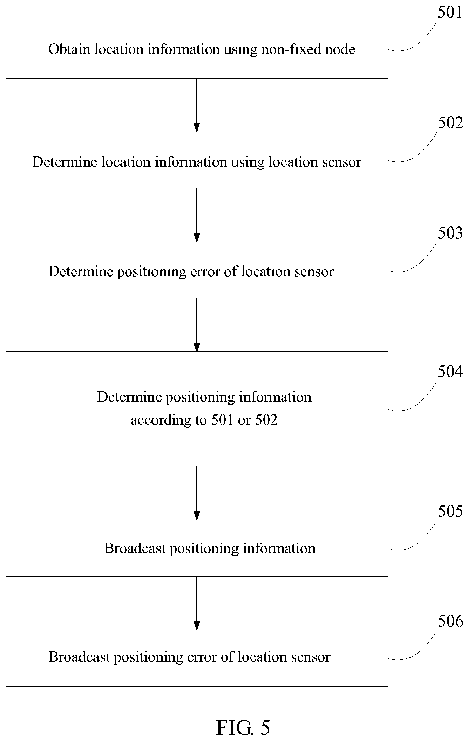

An aspect of the present disclosure provides another positioning method. As shown in FIG. 5, when a self-moving node may be positioned by using only a sensor of the self-moving node, the method includes:
501. The self-moving node obtains location information by using at least one non-fixed node.

The location information is information for positioning. In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the non-fixed node may be a standard node. The standard node is a node that determines positioning information by using a fixed node. In this aspect of the present disclosure, when the self-moving node determines positioning information by using at least one standard node, because the standard node obtains location information by using a fixed node, a positioning error in the location information broadcast by the standard node is relatively small, and further, a positioning error in the location information obtained by the self-moving node by using the at least one standard node is relatively small.

In this aspect of the present disclosure, the self-moving node may further determine positioning information by using a location sensor. The location sensor may obtain location information of the self-moving node by using data such as a moving speed, a moving direction, and a moving height of the self-moving node. In this aspect of the present disclosure, the location sensor may be a gyroscope, an acceleration sensor, a magnetometer, a geomagnetic sensor, or the like. Specifically, the location sensor may be a GPS, a G-Sensor, a Gyroscope, a Geomagnetism, or the like.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

In this aspect of the present disclosure, a positioning error of the at least one non-fixed node may be a greatest positioning error of the at least one non-fixed node. For example, if the self-moving node may obtain the location information by using four other nodes, and positioning errors of the four nodes are respectively 0.1, 0.2, 0.25, and 0.5, the self-moving node obtains the maximum value 0.5 and uses 0.5 as the greatest positioning error of the at least one another node.

Optionally, when the self-moving node may be positioned by using multiple groups of different non-standard nodes, the self-moving node may first obtain a positioning error respectively corresponding to each node in the multiple groups of different non-standard nodes, then separately obtain a greatest positioning error respectively corresponding to each group of non-standard nodes in the multiple groups of different non-standard nodes, and finally select, from the multiple groups of different other nodes, a group of non-standard nodes corresponding to a minimum value in the greatest positioning errors, so as to obtain the location information of the self-moving node.

For example, the self-moving node may be positioned by using three groups of different non-standard nodes. The self-moving node first obtains a positioning error corresponding to each node in the three groups of non-standard nodes. Positioning errors corresponding to a first group of non-standard nodes are 0.2, 0.4, 0.3, 0.35, and 0.22 respectively, positioning errors corresponding to a second group of non-standard nodes are 0.3, 0.5, 0.15, and 0.1 respectively, and positioning errors corresponding to a third group of non-standard nodes are 0.2, 0.2, 0.45, 0.3, and 0.38 respectively. Then, the self-moving node obtains greatest positioning errors respectively corresponding to the three groups of non-standard nodes, where a greatest positioning error corresponding to the first group of non-standard nodes is 0.4, a greatest positioning error corresponding to the second group of non-standard nodes is 0.5, and a greatest positioning error corresponding to the third group of non-standard nodes is 0.45. Finally, the self-moving node selects a group of nodes, that is, the first group of other nodes, corresponding to the minimum value 0.4 in the greatest positioning errors respectively corresponding to the three groups of non-standard nodes.

502. The self-moving node determines location information by using a location sensor.

Specifically, a method for determining positioning information by the self-moving node by using a fixed node includes: a triangle algorithm and a location fingerprinting algorithm. In the triangle algorithm, location information of a to-be-measured object is estimated by using information about a distance between the to-be-measured object and at least three known reference points. In the location fingerprinting algorithm, RSS values that are from different fixed nodes and on each reference point are measured in advance, and a correspondence between location information of each reference point and the RSS values from the different fixed nodes is recorded; then location information of a to-be-measured object is obtained according to RSS values that are from different fixed nodes and on the to-be-measured object. In this aspect of the present disclosure, a standard node may obtain location information by using the triangle algorithm, or may obtain location information by using the location fingerprinting algorithm, which is not limited in this aspect of the present disclosure.

In this aspect of the present disclosure, a method for determining positioning information is proposed for a self-moving node that cannot determine the positioning information according to a fixed node, that is, proposed for a self-moving node that is in a positioning blind area, so that positioning information corresponding to the self-moving node in the positioning blind area may be determined. In this aspect of the present disclosure, the self-moving node may determine the positioning information by using at least one another self-moving node or a sensor.

Optionally, the self-moving node may determine the positioning information by using the location information broadcast by the at least one non-fixed node, where the non-fixed node may be a standard node or a non-standard node. When the self-moving node determines the positioning information by using at least one standard node, because the standard node determines positioning information by using a fixed node, a positioning error in location information broadcast by the standard node is relatively small, and further, a positioning error in the positioning information determined by the self-moving node by using the at least one standard node is relatively small. When the self-moving node determines the positioning information by using at least one non-standard node, because the non-standard node determines positioning information by using another fixed node or a location sensor, a positioning error in location information broadcast by the non-standard node is relatively great, and further, a positioning error in the positioning information determined by the self-moving node by using the at least one non-standard node is relatively great.

Alternatively, the self-moving node may further determine the positioning information by using a location sensor. Because data collected by the location sensor includes a large amount of noise, a positioning error in the positioning information determined by using the location sensor is relatively great. In this aspect of the present disclosure, if the self-moving node has determined the positioning information by using the location sensor, when the self-moving node may determine positioning information by using a fixed node or a non-fixed node with a relatively small positioning error, the self-moving node calibrates the location sensor according to the currently determined positioning information and the positioning information previously determined by using the location sensor, and updates the positioning error of the location sensor.

503. The self-moving node determines a positioning error of the location sensor.

In this aspect of the present disclosure, because data collected by a sensor includes a large amount of noise, a positioning error in location information obtained by using the sensor is relatively great. For example, the self-moving node may obtain the location information by means of Sensor Assisted Positioning (sensor assisted positioning). Because a function of obtaining the location information by means of Sensor Assisted Positioning becomes inaccurate over time, when Sensor Assisted Positioning may be used to obtain the location information by using a fixed WiFi AP or a standard node, positioning calibration needs to be performed on the sensor.

504. The self-moving node determines positioning information according to the location information obtained by using the at least one non-fixed node or the location information determined by using the location sensor.

Specifically, a method for determining positioning information by the self-moving node by using a fixed node includes: a triangle algorithm and a location fingerprinting algorithm. In the triangle algorithm, location information of a to-be-measured object is estimated by using information about a distance between the to-be-measured object and at least three known reference points. In the location fingerprinting algorithm, RSS values that are from different fixed nodes and on each reference point are measured in advance, and a correspondence between location information of each reference point and the RSS values from the different fixed nodes is recorded; then location information of a to-be-measured object is obtained according to RSS values that are from different fixed nodes and on the to-be-measured object. In this aspect of the present disclosure, a standard node may obtain location information by using the triangle algorithm, or may obtain location information by using the location fingerprinting algorithm, which is not limited in this aspect of the present disclosure.

In this aspect of the present disclosure, a method for determining positioning information is proposed for a self-moving node that cannot determine the positioning information according to a fixed node, that is, proposed for a self-moving node that is in a positioning blind area, so that positioning information corresponding to the self-moving node in the positioning blind area may be determined. In this aspect of the present disclosure, the self-moving node may determine the positioning information by using at least one another self-moving node or a sensor.

Optionally, the self-moving node may determine the positioning information by using the location information broadcast by the at least one non-fixed node, where the non-fixed node may be a standard node or a non-standard node. When the self-moving node determines the positioning information by using at least one standard node, because the standard node determines positioning information by using a fixed node, a positioning error in location information broadcast by the standard node is relatively small, and further, a positioning error in the positioning information determined by the self-moving node by using the at least one standard node is relatively small. When the self-moving node determines the positioning information by using at least one non-standard node, because the non-standard node determines positioning information by using another fixed node or a location sensor, a positioning error in location information broadcast by the non-standard node is relatively great, and further, a positioning error in the positioning information determined by the self-moving node by using the at least one non-standard node is relatively great.

Alternatively, the self-moving node may further determine the positioning information by using a location sensor. Because data collected by the location sensor includes a large amount of noise, a positioning error in the positioning information determined by using the location sensor is relatively great. In this aspect of the present disclosure, if the self-moving node has determined the positioning information by using the location sensor, when the self-moving node may determine positioning information by using a fixed node or a non-fixed node with a relatively small positioning error, the self-moving node calibrates the location sensor according to the currently determined positioning information and the positioning information previously determined by using the location sensor, and updates the positioning error of the location sensor.

In this aspect of the present disclosure, when the self-moving node cannot obtain the location information by using a fixed node or a non-fixed node, that is, when no fixed node or non-fixed node that provides location information for the self-moving node exists near the self-moving node, the self-moving node may obtain the location information by using a location sensor.

505. The self-moving node broadcasts the positioning information.

In this aspect of the present disclosure, the self-moving node broadcasts the determined positioning information, so that another self-moving node may receive the location information broadcast by the self-moving node. Therefore, the another self-moving node may determine positioning information by using the location information broadcast by the self-moving node.

506. The self-moving node broadcasts the positioning error of the location sensor.

In this aspect of the present disclosure, the self-moving node may broadcast only the location information, or broadcast both the positioning information and the positioning error.

In an aspect, when the self-moving node obtains the location information by using a fixed node, a positioning error of the obtained location information is relatively small. In this case, the self-moving node may broadcast the location information and the relatively small positioning error. When the self-moving node obtains the location information by using a standard node, a positioning error of the obtained location information is relatively small. In this case, the self-moving node may broadcast the location information and the relatively small positioning error.

In another aspect, when the self-moving node obtains the location information by using a non-standard node, a positioning error of the obtained location information is relatively great. In this case, the self-moving node may broadcast the location information and the relatively great positioning error. When the self-moving node obtains the location information by using a location sensor, a positioning error of the obtained location information is relatively great. In this case, the self-moving node may broadcast the location information and the relatively great positioning error.

Specifically, when the self-moving node obtains the location information by using a standard node, a positioning error in the location information of the self-moving node obtained by the self-moving node is relatively small. In this case, the self-moving node broadcasts the location information and the relatively small positioning error.

In this aspect of the present disclosure, the self-moving node may determine, according to location information and a positioning error that are broadcast by another peripheral non-fixed node, a positioning period of the self-moving node and a frequency of broadcasting the location information. Specifically, when the positioning error corresponding to the location information broadcast by the another peripheral non-fixed node is relatively small, accuracy of the location information obtained by the self-moving node is relatively high. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to data fed back by the location sensor, a positioning period of the self-moving node and a frequency of broadcasting the location information. Specifically, when a change of acceleration data fed back by the location sensor is relatively small, that is, the self-moving node does not move relatively frequently, the self-moving node does not need to frequently obtain the location information. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to an actual demand, a positioning period of the self-moving node and a frequency of broadcasting the location information. Specifically, when a positioning real-time requirement of the self-moving node is relatively high, the self-moving node may prolong the positioning period of the self-moving node and increase the frequency of broadcasting the location information. In this aspect of the present disclosure, a real-time requirement of the self-moving node can be met by prolonging the positioning period of the self-moving node.

According to the positioning method and apparatus provided in the aspects of the present disclosure, first, location information is obtained by using at least one non-fixed node; then, positioning information is determined according to the location information; and finally, the positioning information is broadcast. Compared with the prior art in which a self-moving node can obtain location information by using only a fixed node, in this aspect of the present disclosure, a self-moving node can determine positioning information of the self-moving node by obtaining location information broadcast by another non-fixed node, so as to determine the positioning information by using location information of another node when the self-moving node cannot determine the positioning information by using a fixed node, thereby positioning a self-moving node that is in a positioning blind area.

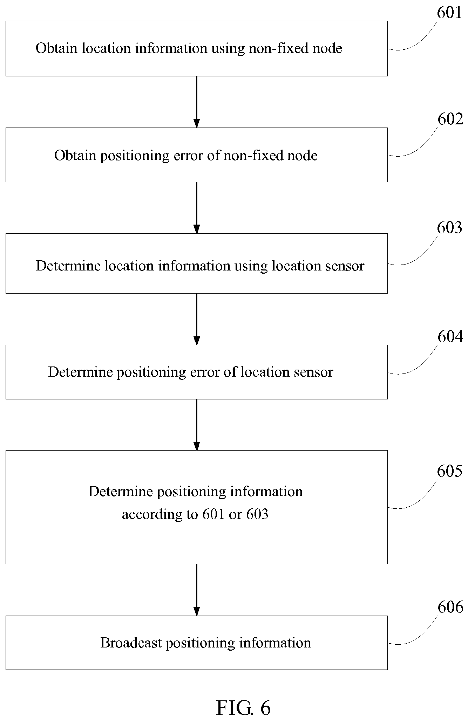

An aspect of the present disclosure provides another positioning method. As shown in FIG. 6, the method includes:
601. A self-moving node obtains location information by using at least one non-fixed node.

The location information is information for positioning. In this aspect of the present disclosure, the non-fixed node is another self-moving node except the foregoing self-moving node. In this aspect of the present disclosure, a fixed node may be a fixed WiFi AP, and the non-fixed node may be a self-moving node.

Optionally, the non-fixed node may be a standard node. The standard node is a node that determines positioning information by using a fixed node.

Alternatively, the non-fixed node may also be a non-standard node. The non-standard node is a node that determines positioning information by using a non-fixed node or a location sensor.

In this aspect of the present disclosure, the non-fixed node may be a standard node. The standard node is a node that determines positioning information by using a fixed node. In this aspect of the present disclosure, when the self-moving node determines positioning information by using at least one standard node, because the standard node obtains location information by using a fixed node, a positioning error in the location information broadcast by the standard node is relatively small, and further, a positioning error in the location information obtained by the self-moving node by using the at least one standard node is relatively small.

In this aspect of the present disclosure, the self-moving node may further determine positioning information by using a location sensor. The location sensor may obtain location information of the self-moving node by using data such as a moving speed, a moving direction, and a moving height of the self-moving node. In this aspect of the present disclosure, the location sensor may be a gyroscope, an acceleration sensor, a magnetometer, a geomagnetic sensor, or the like. Specifically, the location sensor may be a GPS, a G-Sensor, a Gyroscope, a Geomagnetism, or the like.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

In this aspect of the present disclosure, a positioning error of the at least one non-fixed node may be a greatest positioning error of the at least one non-fixed node. For example, if the self-moving node may obtain the location information by using four other nodes, and positioning errors of the four nodes are respectively 0.1, 0.2, 0.25, and 0.5, the self-moving node obtains the maximum value 0.5 and uses 0.5 as the greatest positioning error of the at least one another node.

602. The self-moving node obtains a positioning error of the at least one non-fixed node.

The positioning error of the at least one non-fixed node may be a greatest positioning error of the at least one non-fixed node.

For example, if the self-moving node may obtain the location information by using four other nodes, and positioning errors of the four nodes are respectively 0.1, 0.2, 0.25, and 0.5, the self-moving node obtains the maximum value 0.5 and uses 0.5 as the greatest positioning error of the at least one another node.

Optionally, when the self-moving node may be positioned by using multiple groups of different non-standard nodes, the self-moving node may first obtain a positioning error respectively corresponding to each node in the multiple groups of different non-standard nodes, then separately obtain a greatest positioning error respectively corresponding to each group of non-standard nodes in the multiple groups of different non-standard nodes, and finally select, from the multiple groups of different other nodes, a group of non-standard nodes corresponding to a minimum value in the greatest positioning errors, so as to obtain the location information of the self-moving node.

For example, the self-moving node may be positioned by using three groups of different non-standard nodes. The self-moving node first obtains a positioning error corresponding to each node in the three groups of non-standard nodes. Positioning errors corresponding to a first group of non-standard nodes are 0.2, 0.4, 0.3, 0.35, and 0.22 respectively, positioning errors corresponding to a second group of non-standard nodes are 0.3, 0.5, 0.15, and 0.1 respectively, and positioning errors corresponding to a third group of non-standard nodes are 0.2, 0.2, 0.45, 0.3, and 0.38 respectively. Then, the self-moving node obtains greatest positioning errors respectively corresponding to the three groups of non-standard nodes, where a greatest positioning error corresponding to the first group of non-standard nodes is 0.4, a greatest positioning error corresponding to the second group of non-standard nodes is 0.5, and a greatest positioning error corresponding to the third group of non-standard nodes is 0.45. Finally, the self-moving node selects a group of nodes, that is, the first group of other nodes, corresponding to the minimum value 0.4 in the greatest positioning errors respectively corresponding to the three groups of non-standard nodes.

603. The self-moving node determines location information by using a location sensor.

Specifically, a method for determining positioning information by the self-moving node by using a fixed node includes: a triangle algorithm and a location fingerprinting algorithm. In the triangle algorithm, location information of a to-be-measured object is estimated by using information about a distance between the to-be-measured object and at least three known reference points. In the location fingerprinting algorithm, RSS values that are from different fixed nodes and on each reference point are measured in advance, and a correspondence between location information of each reference point and the RSS values from the different fixed nodes is recorded; then location information of a to-be-measured object is obtained according to RSS values that are from different fixed nodes and on the to-be-measured object. In this aspect of the present disclosure, a standard node may obtain location information by using the triangle algorithm, or may obtain location information by using the location fingerprinting algorithm, which is not limited in this aspect of the present disclosure.

In this aspect of the present disclosure, a method for determining positioning information is proposed for a self-moving node that cannot determine the positioning information according to a fixed node, that is, proposed for a self-moving node that is in a positioning blind area, so that positioning information corresponding to the self-moving node in the positioning blind area may be determined. In this aspect of the present disclosure, the self-moving node may determine the positioning information by using at least one another self-moving node or a sensor.

Optionally, the self-moving node may determine the positioning information by using the location information broadcast by the at least one non-fixed node, where the non-fixed node may be a standard node or a non-standard node. When the self-moving node determines the positioning information by using at least one standard node, because the standard node determines positioning information by using a fixed node, a positioning error in location information broadcast by the standard node is relatively small, and further, a positioning error in the positioning information determined by the self-moving node by using the at least one standard node is relatively small. When the self-moving node determines the positioning information by using at least one non-standard node, because the non-standard node determines positioning information by using another fixed node or a location sensor, a positioning error in location information broadcast by the non-standard node is relatively great, and further, a positioning error in the positioning information determined by the self-moving node by using the at least one non-standard node is relatively great.

Alternatively, the self-moving node may further determine the positioning information by using a location sensor. Because data collected by the location sensor includes a large amount of noise, a positioning error in the positioning information determined by using the location sensor is relatively great. In this aspect of the present disclosure, if the self-moving node has determined the positioning information by using the location sensor, when the self-moving node may determine positioning information by using a fixed node or a non-fixed node with a relatively small positioning error, the self-moving node calibrates the location sensor according to the currently determined positioning information and the positioning information previously determined by using the location sensor, and updates the positioning error of the location sensor.

604. The self-moving node determines a positioning error of the location sensor.

In this aspect of the present disclosure, because data collected by a sensor includes a large amount of noise, a positioning error in location information obtained by using the sensor is relatively great. For example, the self-moving node may obtain the location information by means of Sensor Assisted Positioning (sensor assisted positioning). Because a function of obtaining the location information by means of Sensor Assisted Positioning becomes inaccurate over time, when Sensor Assisted Positioning may be used to obtain the location information by using a fixed WiFi AP or a standard node, positioning calibration needs to be performed on the sensor.

605. The self-moving node determines positioning information according to the location information obtained by using the at least one non-fixed node or the location information determined by using the location sensor.

Specifically, step 605 may be: if the positioning error of the at least one non-fixed node is less than or equal to the positioning error of the location sensor, determining, by the self-moving node, the positioning information according to the location information obtained by using the at least one non-fixed node.

In this aspect of the present disclosure, when the greatest positioning error of the at least one non-fixed node is less than or equal to the positioning error of the location sensor, accuracy of the location information obtained by the self-moving node by using the at least one another node is higher. Therefore, the self-moving node needs to determine the location information by using the at least one another node.

In this aspect of the present disclosure, when the self-moving node determines the positioning information according to the location information obtained by using the at least one non-fixed node, the self-moving node updates the positioning error of the location sensor according to the positioning error of the at least one non-fixed node. Specifically, the self-moving node may calibrate the location sensor according to the positioning error of the at least one non-fixed node, and update a positioning error of the calibrated location sensor.

In this aspect of the present disclosure, when the self-moving node obtains the location information by using a non-standard node, the positioning error in the location information of the self-moving node obtained by the self-moving node is less than the positioning error in the location information obtained by using the location sensor. In this case, the self-moving node may update the positioning error of the location sensor by using a difference between the location information obtained by using the non-standard node and the location information obtained by using the location sensor.

In this aspect of the present disclosure, because data collected by a sensor includes a large amount of noise, a positioning error in location information obtained by using the sensor is relatively great. For example, the self-moving node may obtain the location information by means of Sensor Assisted Positioning. Because a function of obtaining the location information by means of Sensor Assisted Positioning becomes inaccurate over time, when Sensor Assisted Positioning may be used to obtain the location information by using a fixed WiFi AP or a standard node, positioning calibration needs to be performed on the sensor.

Specifically, step 605 may also be: if the positioning error of the at least one non-fixed node is greater than the positioning error of the sensor, determining, by the self-moving node, the positioning information according to the location information determined by using the location sensor.

In this aspect of the present disclosure, when the greatest positioning error of the at least one non-fixed node is greater than the positioning error of the location sensor, accuracy of the location information determined by the self-moving node by using the location sensor is higher. Therefore, the self-moving node needs to determine the location information by using the location sensor.

In this aspect of the present disclosure, a positioning error of at least one non-standard node may represent accuracy of the location information obtained by the self-moving node by using at least one another node. The positioning error of the location sensor may represent accuracy of the location information obtained by the self-moving node by using the sensor. Specifically, if a positioning error of the at least one another node is less than or equal to the positioning error of the location sensor, accuracy of the location information obtained by the self-moving node by using the at least one another node is higher; if a greatest positioning error of the at least one another node is greater than the positioning error of the location sensor, accuracy of the location information obtained by the self-moving node by using the location sensor is higher.

606. The self-moving node broadcasts the positioning information.

In this aspect of the present disclosure, the self-moving node broadcasts the determined positioning information, so that another self-moving node may receive the location information broadcast by the self-moving node. Therefore, the another self-moving node may determine positioning information by using the location information broadcast by the self-moving node.

Optionally, after step 606, the method may further include: broadcasting, by the self-moving node, the positioning error of the at least one non-fixed node.

In this aspect of the present disclosure, when the self-moving node determines the positioning information by using the at least one non-fixed node, the self-moving node broadcasts the positioning error of the at least one non-fixed node.

Alternatively, after step 606, the method may further include: broadcasting, by the self-moving node, the positioning error of the location sensor.

In this aspect of the present disclosure, when the self-moving node determines the positioning information by using the location sensor, the self-moving node broadcasts the positioning error of the location sensor. In this aspect of the present disclosure, when the self-moving node updates the positioning error of the location sensor by using the at least one non-fixed node, the self-moving node broadcasts an updated positioning error of the location sensor.

In this aspect of the present disclosure, the self-moving node may broadcast only the location information, or broadcast both the positioning information and the positioning error.

In an aspect, when the self-moving node obtains the location information by using a fixed node, a positioning error of the obtained location information is relatively small. In this case, the self-moving node may broadcast the location information and the relatively small positioning error. When the self-moving node obtains the location information by using a standard node, a positioning error of the obtained location information is relatively small. In this case, the self-moving node may broadcast the location information and the relatively small positioning error.

In another aspect, when the self-moving node obtains the location information by using a non-standard node, a positioning error of the obtained location information is relatively great. In this case, the self-moving node may broadcast the location information and the relatively great positioning error. When the self-moving node obtains the location information by using a location sensor, a positioning error of the obtained location information is relatively great. In this case, the self-moving node may broadcast the location information and the relatively great positioning error.

Specifically, when the self-moving node obtains the location information by using a standard node, a positioning error in the location information of the self-moving node obtained by the self-moving node is relatively small. In this case, the self-moving node broadcasts the location information and the relatively small positioning error.

In this aspect of the present disclosure, the self-moving node may determine, according to location information and a positioning error that are broadcast by another peripheral non-fixed node, a positioning period of the self-moving node and a frequency of broadcasting the location information. Specifically, when the positioning error corresponding to the location information broadcast by the another peripheral non-fixed node is relatively small, accuracy of the location information obtained by the self-moving node is relatively high. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to data fed back by the location sensor, a positioning period of the self-moving node and a frequency of broadcasting the location information. Specifically, when a change of acceleration data fed back by the location sensor is relatively small, that is, the self-moving node does not move relatively frequently, the self-moving node does not need to frequently obtain the location information. In this case, the self-moving node may shorten the positioning period of the self-moving node and reduce the frequency of broadcasting the location information. In this aspect of the present disclosure, resource consumption can be decreased by reducing the frequency for the self-moving node to broadcast the location information.

In this aspect of the present disclosure, the self-moving node may further determine, according to an actual demand, a positioning period of the self-moving node and a frequency of broadcasting the location information. Specifically, when a positioning real-time requirement of the self-moving node is relatively high, the self-moving node may prolong the positioning period of the self-moving node and increase the frequency of broadcasting the location information. In this aspect of the present disclosure, a real-time requirement of the self-moving node can be met by prolonging the positioning period of the self-moving node.

In this aspect of the present disclosure, when the self-moving node cannot obtain the location information by using a fixed node or a non-fixed node, that is, when no fixed node or non-fixed node that provides location information for the self-moving node exists near the self-moving node, the self-moving node may obtain the location information by using a location sensor.

According to the positioning method and apparatus provided in the aspects of the present disclosure, first, location information is obtained by using at least one non-fixed node; then, positioning information is determined according to the location information; and finally, the positioning information is broadcast. Compared with the prior art in which a self-moving node can obtain location information by using only a fixed node, in this aspect of the present disclosure, a self-moving node can determine positioning information of the self-moving node by obtaining location information broadcast by another non-fixed node, so as to determine the positioning information by using location information of another node when the self-moving node cannot determine the positioning information by using a fixed node, thereby positioning a self-moving node that is in a positioning blind area.

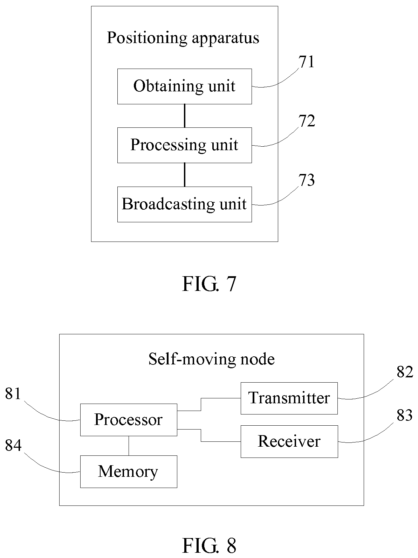

An aspect of the present disclosure provides a positioning apparatus. As shown in FIG. 7, an entity of the apparatus may be a self-moving node. The apparatus includes: an obtaining unit 71, a processing unit 72, and a broadcasting unit 73.

The obtaining unit 71 is configured to obtain location information by using at least one non-fixed node.

The location information is information for positioning.

In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

The processing unit 72 is configured to determine positioning information according to the location information obtained by the obtaining unit 71.

The broadcasting unit 73 is configured to broadcast the positioning information determined by the processing unit 72.

In this aspect of the present disclosure, the self-moving node broadcasts the obtained location information, and another self-moving node may receive the location information broadcast by the self-moving node. Therefore, the another self-moving node may determine positioning information of the another self-moving node by using the location information broadcast by the self-moving node.

It should be noted that, for other corresponding descriptions corresponding to the functional units in the positioning apparatus provided in this aspect of the present disclosure, reference may be made to the corresponding descriptions in FIG. 2, and details are not described herein again.

Further, an entity of the positioning apparatus may be, but not limited to, a self-moving node. As shown in FIG. 8, the self-moving node may include: a processor 81, a transmitter 82, a receiver 83, and a memory 84, where the transmitter 82, the receiver 83, and the memory 84 are connected to the processor 81.

The processor 81 is configured to obtain location information by using at least one non-fixed node.

The location information is information for positioning.

In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

The processor 81 is further configured to determine positioning information according to the location information.

The processor 81 is configured to broadcast the positioning information.

In this aspect of the present disclosure, the self-moving node broadcasts the obtained location information, and another self-moving node may receive the location information broadcast by the self-moving node. Therefore, the another self-moving node may determine positioning information of the another self-moving node by using the location information broadcast by the self-moving node.

It should be noted that, for other corresponding descriptions corresponding to the devices in the self-moving node provided in this aspect of the present disclosure, reference may be made to the corresponding descriptions in FIG. 2, and details are not described herein again.

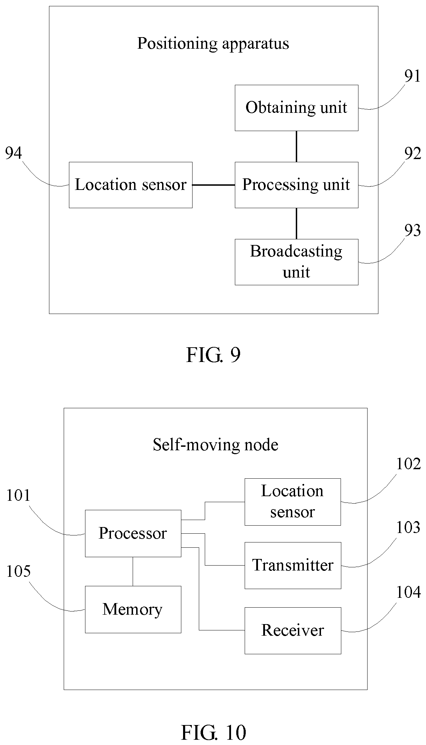

An aspect of the present disclosure provides another positioning apparatus. As shown in FIG. 9, an entity of the apparatus may be a self-moving node. The apparatus includes: an obtaining unit 91, a processing unit 92, and a broadcasting unit 93.

The obtaining unit 91 is configured to obtain location information by using at least one non-fixed node.

The location information is information for positioning.

In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

The processing unit 92 is configured to determine positioning information according to the location information obtained by the obtaining unit 91.

The broadcasting unit 93 is configured to broadcast the positioning information determined by the processing unit 92.

In this aspect of the present disclosure, the self-moving node broadcasts the obtained location information, and another self-moving node may receive the location information broadcast by the self-moving node. Therefore, the another self-moving node may determine positioning information of the another self-moving node by using the location information broadcast by the self-moving node.

Optionally, the apparatus may further include a location sensor 94.

The location sensor 94 is configured to determine location information.

The processing unit 92 is specifically configured to determine the positioning information according to the location information obtained by the obtaining unit 91 or the location information determined by the location sensor 94.

The obtaining unit 91 is further configured to obtain a positioning error of the at least one non-fixed node.

The positioning error of the at least one non-fixed node is a greatest positioning error of the at least one non-fixed node.

The broadcasting unit 93 is further configured to broadcast the positioning error of the at least one non-fixed node obtained by the obtaining unit 91.

The obtaining unit 91 is further configured to obtain a positioning error of the at least one non-fixed node.

The positioning error of the at least one non-fixed node is a greatest positioning error of the at least one non-fixed node.

The location sensor 94 is further configured to determine a positioning error of the location sensor.

The processing unit 92 is specifically configured to: when the positioning error obtained by the obtaining unit 91 is less than or equal to the positioning error determined by the location sensor 94, determine that the location information obtained by the obtaining unit 91 is the positioning information; or
the processing unit 92 is further specifically configured to: when the positioning error obtained by the obtaining unit 91 is greater than the positioning error determined by the location sensor 94, determine that the location information determined by the location sensor is the positioning information.

The processing unit 92 is further configured to update the positioning error of the location sensor 94 according to the positioning error obtained by the obtaining unit 91.

The broadcasting unit 93 is further configured to broadcast the positioning error of the location sensor.

Optionally, the non-fixed node may be a standard node. The standard node is a node that determines positioning information by using a fixed node.

Alternatively, the non-fixed node may be a non-standard node. The non-standard node is a node that determines positioning information by using a non-fixed node or a location sensor.

It should be noted that, for other corresponding descriptions corresponding to the functional units in the positioning apparatus provided in this aspect of the present disclosure, reference may be made to the corresponding descriptions in FIG. 6, and details are not described herein again.

Further, an entity of the positioning apparatus may be, but not limited to, a self-moving node. As shown in FIG. 10, the self-moving node may include: a processor 101, a location sensor 102, a transmitter 103, a receiver 104, and a memory 105, where the transmitter 103, the receiver 104, and the memory 105 are connected to the processor 101.

The processor 101 is configured to obtain location information by using at least one non-fixed node.

The location information is information for positioning.

In this aspect of the present disclosure, the non-fixed node is another self-moving node except the foregoing self-moving node. In this aspect of the present disclosure, a fixed node may be a fixed WiFi AP, and the non-fixed node may be a self-moving node.

In this aspect of the present disclosure, the self-moving node may obtain the location information by using at least one fixed node. In this aspect of the present disclosure, according to whether a self-moving node can obtain location information by using a fixed node, self-moving nodes may be classified into a standard node and a non-standard node. The standard node is a node that can obtain location information by using a fixed node, and the non-standard node is a node that cannot obtain location information by using a fixed node. That is, the non-standard node is in a positioning blind area.

The processor 101 is further configured to determine positioning information according to the location information.

The processor 101 is further configured to broadcast the positioning information.

In this aspect of the present disclosure, the self-moving node broadcasts the obtained location information, and another self-moving node may receive the location information broadcast by the self-moving node. Therefore, the another self-moving node may determine positioning information of the another self-moving node by using the location information broadcast by the self-moving node.

The location sensor 102 is configured to determine location information.

The processor 101 is specifically configured to determine the positioning information according to the location information or the location information determined by the location sensor 102.

The processor 101 is further configured to obtain a positioning error of the at least one non-fixed node.

The positioning error of the at least one non-fixed node is a greatest positioning error of the at least one non-fixed node.

The processor 101 is further configured to broadcast the positioning error of the at least one non-fixed node.

The processor 101 is further configured to obtain a positioning error of the at least one non-fixed node.

The positioning error of the at least one non-fixed node is a greatest positioning error of the at least one non-fixed node.

The location sensor 102 is further configured to determine a positioning error of the location sensor.

The processor 101 is specifically configured to: when the obtained positioning error is less than or equal to the positioning error determined by the location sensor 102, determine that the obtained location information is the positioning information; or
the processor 101 is further specifically configured to: when the obtained positioning error is greater than the positioning error determined by the location sensor 102, determine that the location information determined by the location sensor is the positioning information.

The processor 101 is further configured to update the positioning error of the location sensor 102 according to the obtained positioning error.

The processor 101 is further configured to broadcast the positioning error of the location sensor.

Optionally, the non-fixed node may be a standard node. The standard node is a node that determines positioning information by using a fixed node.

Alternatively, the non-fixed node may be a non-standard node. The non-standard node is a node that determines positioning information by using a non-fixed node or a location sensor.

It should be noted that, for other corresponding descriptions corresponding to the devices in the self-moving node provided in this aspect of the present disclosure, reference may be made to the corresponding descriptions in FIG. 6, and details are not described herein again.

The positioning apparatus provided in the aspects of the present disclosure may implement the foregoing provided method aspects, reference may be made to the descriptions in the method aspects for specific function implementation, and details are not described herein again. The positioning method and apparatus provided in the aspects of the present disclosure may be applicable to positioning of a self-moving node, but are not limited thereto.

A person of ordinary skill in the art may understand that all or some of the processes of the methods in the aspects may be implemented by a computer program instructing relevant hardware. The program may be stored in a computer readable storage medium. When the program runs, the processes of the methods in the aspects are performed. The foregoing storage medium may include: a magnetic disk, an optical disc, a read-only memory (Read-Only Memory, ROM), or a random access memory (Random Access Memory, RAM).

## Claims

1. A positioning method of positioning a non-fixed node in a blind area which is performed by the non-fixed node, comprising:
obtaining (201) location information by using at least one other non-fixed node, wherein the location information is information for positioning;
determining (202) positioning information according to the location information; and
broadcasting (203) the positioning information;
wherein the method further comprises:
obtaining a positioning error of the at least one other non-fixed node, wherein the positioning error of the at least one other non-fixed node is a greatest positioning error of the at least one other non-fixed node;
wherein, a positioning period and a frequency of broadcasting the positioning information are determined according to the location information and the positioning error that are broadcast by the at least one other non-fixed node.

2. The positioning method according to claim 1, wherein the method further comprises:
determining further location information by using a location sensor;
wherein the method further comprises:
determining a positioning error of the location sensor; and
the determining the positioning information according to the location information obtained by using the at least one other non-fixed node or the further location information determined by using the location sensor is specifically:
if the positioning error of the at least one other non-fixed node is less than or equal to the positioning error of the location sensor, determining the positioning information according to the location information obtained by using the at least one other non-fixed node; and
if the positioning error of the at least one other non-fixed node is greater than the positioning error of the sensor, determining the positioning information according to the further location information obtained by using the location sensor.

3. The positioning method according to claim 1, wherein the method further comprises:
broadcasting the positioning error of the at least one other non-fixed node.

4. The positioning method according to claim 2, after the determining the positioning information according to the location information obtained by using the at least one other non-fixed node, further comprising:
updating the positioning error of the location sensor according to the positioning error of the at least one other non-fixed node.

5. The positioning method according to claim 2 or 4, wherein the method further comprises:
broadcasting the positioning error of the location sensor.

6. The positioning method according to any one of claims 1 to 5, wherein each of the other non-fixed node is one of a standard node being a node out of a positioning blind area that obtains location information by using a fixed node and a non-standard node being a node in the positioning blind area that cannot obtain location information by using a fixed node.

7. A positioning apparatus included in a non-fixed node for positioning the non-fixed node in a blind area, comprising:
an obtaining unit (71), configured to obtain location information by using at least one other non-fixed node, wherein the location information is information for positioning;
a processing unit (72), configured to determine positioning information according to the location information obtained by the obtaining unit; and
a broadcasting unit (73), configured to broadcast the positioning information determined by the processing unit;
wherein
the obtaining unit is further configured to obtain a positioning error of the at least one other non-fixed node, wherein the positioning error of the at least one other non-fixed node is a greatest positioning error of the at least one other non-fixed node;
wherein, a positioning period and a frequency of broadcasting the positioning information are determined according to the location information and the positioning error that are broadcast by the at least one other non-fixed node.

8. The positioning apparatus according to claim 7, wherein the apparatus further comprises a location sensor, wherein
the location sensor is configured to determine further location information; and
the location sensor is further configured to determine a positioning error of the location sensor; and
the processing unit is specifically configured to:
when the positioning error obtained by the obtaining unit is less than or equal to the positioning error determined by the location sensor, determine that the location information obtained by the obtaining unit is the positioning information; and
when the positioning error obtained by the obtaining unit is greater than the positioning error determined by the location sensor, determine that the location information determined by the location sensor is the positioning information.

9. The positioning apparatus according to claim 7, wherein
the broadcasting unit is further configured to broadcast the positioning error of the at least one other non-fixed node obtained by the obtaining unit.

10. The positioning apparatus according to claim 8, wherein
the processing unit is further configured to update the positioning error of the location sensor according to the positioning error of the at least one other non-fixed node obtained by the obtaining unit.

11. The positioning apparatus according to claim 7 or 9, wherein the broadcasting unit is further configured to:
broadcast the positioning error of the location sensor.

12. The positioning apparatus according to any one of claims 7 to 11, wherein each of the other non-fixed node is one of a standard node being a node out of a positioning blind area that obtains location information by using a fixed node and a non-standard node being a node in the positioning blind area that cannot obtain location information by using a fixed node.

## Patentansprüche

1. Positionierungsverfahren zum Positionieren eines nicht fixierten Knotens in einem Blindbereich, das von dem nicht fixierten Knoten durchgeführt wird und Folgendes umfasst:
Erhalten (201) von Ortsinformationen durch Verwenden von mindestens einem anderen nicht fixierten Knoten, wobei die Ortsinformationen Informationen für Positionierung sind;
Bestimmen (202) von Positionierungsinformationen gemäß den Ortsinformationen; und
Übertragen (203) der Positionierungsinformationen;
wobei das Verfahren ferner Folgendes umfasst:
Erhalten eines Positionierungsfehlers von dem mindestens einen anderen nicht fixierten Knoten, wobei der Positionierungsfehler des mindestens einen anderen nicht fixierten Knotens ein größter Positionierungsfehler des mindestens einen anderen nicht fixierten Knotens ist;
wobei eine Positionierungsperiode und eine Frequenz des Übertragens der Positionierungsinformationen gemäß den Ortsinformationen und dem Positionierungsfehler bestimmt werden, die von dem mindestens einen anderen nicht fixierten Knoten übertragen werden.

2. Positionierungsverfahren gemäß Anspruch 1, wobei das Verfahren ferner Folgendes umfasst:
Bestimmen weiterer Ortsinformationen durch Verwenden eines Positionssensors;
wobei das Verfahren ferner Folgendes umfasst:
Bestimmen eines Positionierungsfehlers des Positionssensors; und
wobei das Bestimmen der Positionierungsinformationen gemäß den Ortsinformationen, die durch Verwenden des mindestens einen anderen nicht fixierten Knotens erhalten wurden, oder der weiteren Ortsinformationen, die durch Verwenden des Positionssensors bestimmt wurden, insbesondere Folgendes beinhaltet:
falls der Positionierungsfehler des mindestens einen anderen nicht fixierten Knotens kleiner als oder gleich dem Positionierungsfehler des Positionssensors ist, Bestimmen der Positionierungsinformationen gemäß den Ortsinformationen, die durch Verwenden des mindestens einen anderen nicht fixierten Knotens erhalten wurden; und
falls der Positionierungsfehler des mindestens einen anderen nicht fixierten Knotens größer als der Positionierungsfehler des Sensors ist, Bestimmen der Positionierungsinformationen gemäß den weiteren Ortsinformationen, die durch Verwenden des Positionssensors erhalten wurden.

3. Positionierungsverfahren gemäß Anspruch 1, wobei das Verfahren ferner Folgendes umfasst:
Übertragen des Positionierungsfehlers des mindestens einen anderen nicht fixierten Knotens.

4. Positionierungsverfahren gemäß Anspruch 2, nach dem Bestimmen der Positionierungsinformationen gemäß den Ortsinformationen, die durch Verwenden des mindestens einen anderen nicht fixierten Knotens erhalten wurden, das ferner Folgendes umfasst:
Aktualisieren des Positionierungsfehlers des Positionssensors gemäß dem Positionierungsfehler des mindestens einen anderen nicht fixierten Knotens.

5. Positionierungsverfahren gemäß Anspruch 2 oder 4, wobei das Verfahren ferner Folgendes umfasst:
Übertragen des Positionierungsfehlers des Positionssensors.

6. Positionierungsverfahren gemäß einem der Ansprüche 1 bis 5, wobei jeder der anderen nicht fixierten Knoten einer eines Standardknotens ist, der ein Knoten aus einem Positionierungs-Blindbereich ist, der Ortsinformationen durch Verwenden eines fixierten Knotens erhält, und ein Nicht-Standard-Knoten, der ein Knoten in dem Positionierungs-Blindbereich ist, der keine Ortsinformationen durch Verwenden eines fixierten Knotens erhalten kann.

7. Positionierungsvorrichtung, die in einem nicht fixierten Knoten enthalten ist, um den nicht fixierten Knoten in einem Blindbereich zu positionieren, die Folgendes umfasst:
eine Erhaltungseinheit (71), die dazu ausgelegt ist, Ortsinformationen durch Verwenden von mindestens einem anderen nicht fixierten Knoten zu erhalten, wobei die Ortsinformationen Informationen für Positionierung sind;
eine Verarbeitungseinheit (72), die dazu ausgelegt ist, Positionierungsinformationen gemäß den durch die Erhaltungseinheit erhaltenen Ortsinformationen zu bestimmen; und
eine Rundsendeeinheit (73), die dazu ausgelegt ist, die durch die Verarbeitungseinheit bestimmten Positionierungsinformationen zu übertragen;
wobei die Erhaltungseinheit ferner dazu ausgelegt ist, einen Positionierungsfehler von dem mindestens einen anderen nicht fixierten Knoten zu erhalten, wobei der Positionierungsfehler des mindestens einen anderen nicht fixierten Knotens ein größter Positionierungsfehler des mindestens einen anderen nicht fixierten Knotens ist;
wobei eine Positionierungsperiode und eine Frequenz des Übertragens der Positionierungsinformationen gemäß den Ortsinformationen und dem Positionierungsfehler bestimmt werden, die von dem mindestens einen anderen nicht fixierten Knoten übertragen werden.

8. Positionierungsvorrichtung gemäß Anspruch 7, wobei die Vorrichtung ferner einen Positionssensor umfasst, wobei
der Positionssensor dazu ausgelegt ist, weitere Ortsinformationen zu bestimmen; und der Positionssensor ferner dazu ausgelegt ist, einen Positionierungsfehler des Positionssensors zu bestimmen; und
die Verarbeitungseinheit insbesondere für Folgendes ausgelegt ist:
wenn der durch die Erhaltungseinheit erhaltene Positionierungsfehler kleiner als oder gleich dem durch den Positionssensor bestimmten Positionierungsfehler ist, Bestimmen, dass die durch die Erhaltungseinheit erhaltenen Ortsinformationen die Positionierungsinformationen sind; und
wenn der durch die Erhaltungseinheit erhaltene Positionierungsfehler größer als der durch den Positionssensor bestimmte Positionierungsfehler ist, Bestimmen, dass die durch den Positionssensor bestimmten Ortsinformationen die Positionierungsinformationen sind.

9. Positionierungsvorrichtung gemäß Anspruch 7, wobei
die Rundsendeeinheit ferner dazu ausgelegt ist, den durch die Erhaltungseinheit erhaltenen Positionierungsfehler des mindestens einen anderen nicht fixierten Knotens zu übertragen.

10. Positionierungsvorrichtung gemäß Anspruch 8, wobei
die Verarbeitungseinheit ferner dazu ausgelegt ist, den Positionierungsfehler des Positionssensors gemäß dem durch die Erhaltungseinheit erhaltenen Positionierungsfehler des mindestens einen anderen nicht fixierten Knotens zu aktualisieren.

11. Positionierungsvorrichtung gemäß Anspruch 7 oder 9, wobei die Rundsendeeinheit ferner für Folgendes ausgelegt ist:
Übertragen des Positionierungsfehlers des Positionssensors.

12. Positionierungsvorrichtung gemäß einem der Ansprüche 7 bis 11, wobei jeder der anderen nicht fixierten Knoten einer eines Standardknotens ist, der ein Knoten aus einem Positionierungs-Blindbereich ist, der Ortsinformationen durch Verwenden eines fixierten Knotens erhält, und ein Nicht-Standard-Knoten, der ein Knoten in dem Positionierungs-Blindbereich ist, der keine Ortsinformationen durch Verwenden eines fixierten Knotens erhalten kann.

## Revendications

1. Procédé de positionnement pour le positionnement d'un noeud non fixe dans une zone d'ombre qui est mis en oeuvre par le noeud non fixe, comprenant :
obtention (201) d'informations d'emplacement en utilisant au moins un autre noeud non fixe, les informations d'emplacement étant des informations pour le positionnement ;
détermination (202) d'informations de positionnement conformément aux informations d'emplacement ; et
radiodiffusion (203) des informations de positionnement ;
le procédé comprenant en outre :
obtention d'une erreur de positionnement de l'au moins un autre noeud non fixe, l'erreur de positionnement de l'au moins un autre noeud non fixe étant une plus grande erreur de positionnement de l'au moins un autre noeud non fixe ;
une période de positionnement et une fréquence de radiodiffusion des informations de positionnement étant déterminées conformément aux informations d'emplacement et à l'erreur de positionnement qui sont radiodiffusées par l'au moins un autre noeud non fixe.

2. Procédé de positionnement selon la revendication 1, le procédé comprenant en outre :
détermination d'informations d'emplacement supplémentaires en utilisant un capteur d'emplacement ;
le procédé comprenant en outre :
détermination d'une erreur de positionnement du capteur d'emplacement ; et
la détermination des informations de positionnement conformément aux informations d'emplacement obtenues en utilisant l'au moins un autre noeud non fixe ou des informations d'emplacement supplémentaires déterminées en utilisant le capteur d'emplacement étant spécifiquement :
si l'erreur de positionnement de l'au moins un autre noeud non fixe est inférieure ou égale à l'erreur de positionnement du capteur d'emplacement, détermination des informations de positionnement conformément aux informations d'emplacement obtenues en utilisant l'au moins un autre noeud non fixe ; et
si l'erreur de positionnement de l'au moins un autre noeud non fixe est supérieure à l'erreur de positionnement du capteur, détermination des informations de positionnement conformément aux informations d'emplacement supplémentaires déterminées en utilisant le capteur d'emplacement.

3. Procédé de positionnement selon la revendication 1, le procédé comprenant en outre :
radiodiffusion de l'erreur de positionnement de l'au moins un autre noeud non fixe.

4. Procédé de positionnement selon la revendication 2, après la détermination des informations de positionnement conformément aux informations d'emplacement obtenues en utilisant l'au moins un autre noeud non fixe, comprenant en outre :
mise à jour de l'erreur de positionnement du capteur d'emplacement conformément à l'erreur de positionnement de l'au moins un autre noeud non fixe.

5. Procédé de positionnement selon la revendication 2 ou 4, le procédé comprenant en outre :
radiodiffusion de l'erreur de positionnement du capteur d'emplacement.

6. Procédé de positionnement selon l'une quelconque des revendications 1 à 5, chacun des autres noeuds non fixes étant l'un parmi un noeud standard, qui est un noeud hors d'une zone d'ombre de positionnement qui obtient des informations d'emplacement en utilisant un noeud fixe, et un noeud non standard, qui est un noeud dans la zone d'ombre de positionnement qui ne peut pas obtenir des informations d'emplacement en utilisant un noeud fixe.

7. Appareil de positionnement compris dans un noeud non fixe pour le positionnement du noeud non fixe dans une zone d'ombre, comprenant :
une unité d'obtention (71) configurée pour obtenir des informations d'emplacement en utilisant au moins un autre noeud non fixe, les informations d'emplacement étant des informations pour le positionnement ;
une unité de traitement (72) configurée pour déterminer des informations de positionnement conformément aux informations d'emplacement obtenues par l'unité d'obtention ; et
une unité de radiodiffusion (73) configurée pour radiodiffuser les informations de positionnement déterminées par l'unité de traitement ;
l'unité d'obtention étant en outre configurée pour obtenir une erreur de positionnement de l'au moins un autre noeud non fixe, l'erreur de positionnement de l'au moins un autre noeud non fixe étant une plus grande erreur de positionnement de l'au moins un autre noeud non fixe ;
une période de positionnement et une fréquence de radiodiffusion des informations de positionnement étant déterminées conformément aux informations d'emplacement et à l'erreur de positionnement qui sont radiodiffusées par l'au moins un autre noeud non fixe.

8. Appareil de positionnement selon la revendication 7, l'appareil comprenant en outre un capteur d'emplacement,
le capteur d'emplacement étant configuré pour déterminer des informations d'emplacement supplémentaires ; et
le capteur d'emplacement étant en outre configuré pour déterminer une erreur de positionnement du capteur d'emplacement ; et
l'unité de traitement étant spécifiquement configurée pour :
lorsque l'erreur de positionnement obtenue par l'unité d'obtention est inférieure ou égale à l'erreur de positionnement déterminée par le capteur d'emplacement, déterminer que les informations d'emplacement obtenues par l'unité d'obtention sont les informations de positionnement ; et
lorsque l'erreur de positionnement obtenue par l'unité d'obtention est supérieure à l'erreur de positionnement déterminée par le capteur d'emplacement, déterminer que les informations d'emplacement déterminées par le capteur d'emplacement sont les informations de positionnement.

9. Appareil de positionnement selon la revendication 7, l'unité de radiodiffusion étant en outre configurée pour radiodiffuser l'erreur de positionnement de l'au moins un autre noeud non fixe obtenue par l'unité d'obtention.

10. Appareil de positionnement selon la revendication 8, l'unité de traitement étant en outre configurée pour mettre à jour l'erreur de positionnement du capteur d'emplacement conformément à l'erreur de positionnement de l'au moins un autre noeud non fixe obtenue par l'unité d'obtention.

11. Appareil de positionnement selon la revendication 7 ou 9, l'unité de radiodiffusion étant en outre configurée pour radiodiffuser l'erreur de positionnement du capteur d'emplacement.

12. Appareil de positionnement selon l'une quelconque des revendications 7 à 11, chacun des autres noeuds non fixes étant l'un parmi un noeud standard, qui est un noeud hors d'une zone d'ombre de positionnement qui obtient des informations d'emplacement en utilisant un noeud fixe, et un noeud non standard, qui est un noeud dans la zone d'ombre de positionnement qui ne peut pas obtenir des informations d'emplacement en utilisant un noeud fixe.
